# EUROPÄISCHE PATENTSCHRIFT

(11) **EP 2 267 881 B1**
(45) Veröffentlichungstag und Bekanntmachung des Hinweises auf die Patenterteilung: **20.12.2023**
(21) Anmeldenummer: 10005924.5
(22) Anmeldetag: 09.06.2010
(51) Int. Cl.: H02P 3/12

(54) **Bremsschaltung für einen Türbetätiger mit einem generatorisch betreibbaren Elektromotor**
Brake switch for a door actuator with an electric motor operated as generator
Circuit de freinage pour un actionneur de porte doté d'un moteur électrique fonctionnant comme générateur

(30) Priorität: 23.06.2009 DE 102009030225
(43) Veröffentlichungstag der Anmeldung: 29.12.2010
(73) Patentinhaber: dormakaba Deutschland GmbH, 58256 Ennepetal (DE)
(72) Erfinder: Römer, Martin, 58339 Breckerfeld (DE)
(74) Vertreter: Balder IP Law, S.L.

(56) Entgegenhaltungen:
- EP-A1- 1 650 860
- DE-A1- 1 588 527
- DE-A1- 3 924 429
- DE-A1-102005 028 007
- DE-A1-102005 038 331
- US-A- 4 271 383
- US-B1- 6 373 207
- National Semiconductor: "LM117/LM317A/LM317 3-Terminal Adjustable Regulator General Description", , 1 April 2007 (2007-04-01), XP055746130, Retrieved from the Internet: URL:www.ti.com [retrieved on 2020-11-02]

## Beschreibung

Die Erfindung betrifft eine Bremsschaltung für einen Türbetätiger mit einem generatorisch betreibbaren Elektromotor. Der Begriff "Türbetätiger" umfasst sowohl Türschließer als auch Türantriebe, also Drehflügelantriebe, Schiebetürantriebe, Karusselltürantriebe oder dergleichen, die über einen Elektromotor verfügen, der in zumindest eine Bewegungsrichtung eines angeschlossenen Türflügels generatorisch betrieben wird. Türantriebe, bei denen ein Elektromotor hauptsächlich beim Schließen eines angeschlossenen Türflügels generatorisch betrieben wird, sind aus dem Stand der Technik bekannt. So ist ein Türbetätiger mit einem Elektromotor und einer Bremsschaltung aus der DE 10 2005 028 007 A1 gekannt. Des Weiteren ist ein Türantrieb, der einen generatorisch betriebenen Elektromotor zum Schließen eines Türflügels aufweist, beispielsweise aus der DE 10 2004 059 843 B3 bekannt.

Aus der DE 10 2005028 057 A1 sind zwei Bremsschaltungen bekannt.

Gemäß einer ersten Variante werden miteinander in Reihe geschaltete Dioden als Lastwiderstand verwendet, deren Durchlassrichtungen in ein und dieselbe Stromrichtung weisen. Zu einigen der Dioden sind Schalter parallel geschaltet. Beim Schließen des jeweiligen Stromkreises mittels des zugehörigen Schalters wird die dazu parallel geschaltete Diode überbrückt und damit deren elektrischer (Teillast-)Widerstand abgeschaltet. Dadurch kann die mittels der Dioden erzeugte Brems- oder Dämpfwirkung geändert, im vorliegenden Fall erhöht werden. Dies hat den Nachteil, dass die Brems- bzw. Dämpfwirkung nur stufenartig geändert werden kann. Dies kann zu unerwünschten ruckartigen Bewegungen des angeschlossenen Türflügels führen. Zudem sind Dioden hinsichtlich ihrer Durchbruchs-spannungen temperaturabhängig, was insbesondere beim Einsatz von außen montierten Türantrieben nachteilig ist.

Gemäß einer alternativen Variante ist vorgesehen, die Bremsschaltung mittels eines Feldeffekttransistors zu realisieren, dessen Drain- und Source-Anschlüsse im Generatorbetrieb mit entsprechenden Anschlüssen des Elektromotors gekoppelt sind. Der Gate-Anschluss des Feldeffekttransistors ist mit einem Mittenabgriff eines Spannungsteilers gekoppelt, der parallel zur Drain-Source-Strecke des Feldeffekttransistors geschaltet ist. Der Spannungsteiler weist im zur Gate-Source-Strecke des Feldeffekttransistors parallel geschalteten Widerstandszweig des Spannungsteilers mittels Schaltern zu- und wegschaltbare Widerstände auf. Feldeffekttransistoren haben den Nachteil, dass sie eine recht hohe Mindest-Gate-Source-Spannung verfügen, was den Einsatzbereich bei niedrigen Generatorspannungen einschränkt.

Diese Variante ist in der DE 10 2005 028 007 A1 beschrieben.

Aufgabe der Erfindung ist es, die Nachteile des Standes der Technik zumindest zu verringern.

Diese Aufgabe wird durch den Gegenstand des Anspruchs 1 gelöst. Vorteilhafte Weiterbildungen der Erfindung sind in den Unteransprüchen angegeben.

Erfindungsgemäß ist ein Türbetätiger mit eine Elektromotor und einer Bremsschaltung vorgesehen, um eine Bewegung der angeschlossenen Tür in zumindest einer Bewegungsrichtung zu beeinflussen.

Die Bremsschaltung ist eingerichtet, bei einem generatorischen Betreiben des Elektromotors in eine erste, der einen Bewegungsrichtung entgegengesetzte Betriebsrichtung des Elektromotors dessen generatorisch erzeugte Energie einem Bipolartransistor als Lastwiderstand zuzuführen. Die erste Betriebsrichtung entspricht dabei vorzugsweise der Schließrichtung der angeschlossenen Tür.

Der Bipolartransistor hat den Vorteil, dass das Freischalten dessen Kollektor-Emitter-Strecke durch eine dem Feldeffekt-Transistor gegenüber erheblich kleineren Basis-Emitterspannung möglich ist. Dadurch ist eine Funktion der Schaltung auch bei kleinen generatorischen Spannungen möglich.

Beim generatorischen Betrieb besagten Elektromotors ist dessen erzeugte Spannung abhängig von der Drehzahl bzw. Bewegungsgeschwindigkeit des Rotors des Elektromotors am Stator bzw. Käfig des Elektromotors vorbei. Je höher diese Geschwindigkeit ist, umso höher ist die generatorisch selbstinduzierte oder generatorisch erzeugte Spannung.

Aufgrund der Nutzung eines Bipolartransistors können auch dann ein Freichalten dessen Kollektor-Emitter-Strecke bewirkt und damit eine Brems- bzw. Türdämpfungswirkung erlangt werden, wenn sich die Tür nur sehr langsam bewegt, was zu einer sehr niedrigen Spannung am Elektromotor führt. Bei einem Feldeffekttransistor tritt die Dämpfungswirkung erst bei wesentlich höheren Geschwindigkeiten des Rotors und damit der angeschlossenen Tür ein und kann daher insbesondere bei niedrigen Öffnungsgeschwindigkeiten kaum oder gar nicht genutzt werden.

Die Bremsschaltung weist ferner einen Spannungsregler auf, der eine an den Basis-Anschluss des Bipolartransistors angelegte Spannung gemäß einer vorbestimmten Regelspannung auf Basis einer Referenzspannung regelt. Aufgrund des nahezu konstanten Innenwiderstands des Spannungsreglers darüber die an den Bipolartransistor angelegte Stromstärke mitgeregelt.

Der Spannungsregler umfasst einen Referenzeingang zum Anlegen besagter Referenzspannung, einen Spannungseingang zum Anlegen der generatorisch erzeugten Spannung und einen Ausgang zum Ausgeben der Regelspannung.

Ein erster Spannungsanschluss des Elektromotors ist im Generatorbetrieb des Elektromotors mit dem Kollektor-Anschluss des Bipolartransistors, dem Spannungseingang des Spannungsreglers und über einen ersten Widerstandszweig mit dem Referenzeingang des Spannungsreglers gekoppelt. Ein zweiter Spannungsanschluss des Elektromotors ist im Generatorbetrieb mit dem Emitter-Anschluss des Bipolartransistors gekoppelt. Der erste Widerstandszweig umfasst zumindest einen elektrischen Widerstand. Damit entsteht ein geschlossener Bremsstromkreis.

Diese Art von Bremsschaltung hat neben dem enorm einfachen Aufbau den Vorteil, ohne besondere zusätzliche Maßnahmen bereits bei sehr geringen Tür-Bewegungsgeschwindigkeiten bereits eine Brems- bzw. Dämpfungswirkung entgegen der Tür-Bewegungsrichtung zu erlangen. D. h. diese Schaltung ist sehr kostengünstig und robust. Der Bipolartransistor hat zudem den Vorteil, dass ein Anstieg der generatorisch erzeugten Spannung keinen oder kaum Einfluss auf den maximal möglichen Kollektor-Emitter-Strom im Bipolartransistor hat und damit das Brems- bzw. Dämpfverhalten negativ beeinflussen könnte. Zudem bewirkt der Spannungsregler, dass dem Bipolartransistor immer eine notwendige (Basis-) Betriebsspannung eingespeist wird.

Vorzugsweise ist der erste Widerstandszweig als ein erster Spannungsteilerabschnitt Teil eines Spannungsteilers. Der Spannungsteiler ist parallel zur Kollektor-Emitter-Strecke des Bipolartransistors geschaltet, um am Referenzeingang die gewünschte Referenzspannung eingeben zu können. Ein Mittenabgriff des Spannungsteilers ist somit mit dem Referenzeingang des Spannungsreglers gekoppelt. Damit wird dem Spannungsregler die Spannung vorgegeben, über die eine zugehörige Stromstärke an den Basisanschluss des Bipolartransistors angelegt wird. Der erste Spannungsteilerabschnitt ist somit über den Mittenabgriff mit einem zweiten Spannungsteilerabschnitt des Spannungsteilers in Reihe geschaltet. Damit wird ein Teil der generatorisch erzeugten Energie über einen zweiten Spannungsteilerabschnitt des Spannungsteilers abgebaut und damit eine Art Grund-Bremswirkung bzw. -dämpfwirkung erreicht. Der Spannungsregler und der Bipolartransistor dienen dem hauptsächlichen und geregelten Abbauen der noch übrigen generatorisch erzeugten Energie. Der Bipolartransistor kann somit durch den Spannungsteiler aufgrund der Aufnahme eines Teils der generatorisch erzeugten Energie auch zumindest teilweise vor Überlastung geschützt werden, was die Betriebssicherheit erhöht.

Der zweite Spannungsteilerabschnitt umfasst vorzugsweise einen zweiten Widerstandszweig mit einem Schalter und einen mit dem Schalter in Reihe geschalteten elektrischen Widerstand. Dadurch ist es möglich, die Bremswirkung in Abhängigkeit von der Öffnungsposition der angeschlossenen Tür zu- bzw. wegschalten zu können, um damit die Bremswirkung zu verringem bzw. zu erhöhen. Der Schalter ist beispielsweise als Schließer ausbildbar und wird vorzugsweise in einem Bereich nahe der Schließlage der angeschlossenen Tür so betätigt, dass er den Stromkreis schließt und damit den mit ihm in Reihe geschalteten Widerstand dieses zweiten Widerstandszweigs zuschaltet. Dadurch wird die Brems- bzw. Dämpfungswirkung der Bremsschaltung im vorliegenden Fall verringert.

Der zweite Spannungsteilerabschnitt umfasst vorzugsweise zumindest einen zusätzlichen, zum zweiten Widerstandszweig parallel geschalteten Widerstandszweig. Die mehreren Widerstandszweige ermöglichen das Vorsehen zusätzlicher, nicht wegschaltbarer (Last-) Widerstände im zweiten Spannungsteilerabschnitt, um die vorgenannte Grund-Bremswirkung bzw. -dämpfwirkung zu erreichen. Zudem ergibt sich bei der vorbeschriebenen Schließerlösung nach dem Schließen des Stromkreises ein geringerer Gesamtwiderstand des zweiten Spannungsteilerabschnitts. Dies führt dazu, dass durch den Spannungsteiler mehr Bremsenergie abgebaut werden kann und damit am Referenzeingang eine geringere Referenzspannung anliegt, was zu einem geringeren Basisstrom führt. Dadurch verringert sich der Kollektor-Emitter-Strom, wodurch sich der durch den Bipolartransistor gebildete (Teil-)Lastwiderstand vergrößert, was zu einer geringeren Dämpfung der Bewegung des angeschlossenen Flügels führt. Damit ist mit einfachen Mitteln eine Endschlaglösung gegeben, mittels der beispielhaft nahe der Schließlage der Tür deren Schließbewegung weniger Widerstand entgegengesetzt wird. Aber auch der umgekehrte Betrieb ist möglich. Durch Verwendung eines umgekehrt wirkenden Schalters kann die Bremsung der angeschlossenen Tür nahe der Endlagenposition erhöht werden, um das Gefahrenpotential für Personen, die die Tür begehen, weiter zu reduzieren.

Handelt es sich bei dem Türbetätiger um einen Türschließer oder Drehflügelantrieb, wobei der Elektromotor beim Schließen der angeschlossenen Tür generatorisch betrieben wird, wird der üblicherweise vorhandenen Schließerfeder beim Schließvorgang der vorgenannte Brems- oder Dämpfungswiderstand entgegengesetzt. Kurz vor Schließlage verringert sich aufgrund obigen Zuschaltens eines zusätzlichen elektrischen Widerstands der Bremswiderstand, sodass die Schließerfeder mehr Schließkraft auf den zu schließenden Türflügel übertragen kann und damit mit erhöhter Schließkraft in die endgültige Schließlage bewegen kann.

Vorzugsweise umfasst zumindest einer der Widerstandszweige des Spannungsteilers einen einstellbaren Widerstand. Damit kann die Bremsschaltung an die Gegebenheiten bzw. Anforderungen des an den jeweiligen Türbetätigers angeschlossenen Türflügels angepasst werden.

Vorteilhafterweise ist der somit zumindest eine einstellbare Widerstand mittels eines Potentiometers gebildet. Potentiometer bieten die Möglichkeit, so in Bezug auf, an oder in einem Gehäuse des Türbetätigers angeordnet zu werden, dass sie von außen eingestellt werden können.

Vorzugsweise ist zusätzlich eine Sicherungseinrichtung parallel zur Kollektor-Emitter-Strecke des Bipolartransistors geschaltet. Eine derartige Sicherungseinrichtung dient dem Zweck, ein "Durchbrennen" des Bipolartransistors zu verhindern, wenn diesem eine zu hohe Kollektor-Emitterspannung zugeführt wird.

Die Sicherungseinrichtung umfasst vorzugsweise zwei Zener-Dioden, die mit ihren Durchlassrichtungen entgegengesetzt zueinander und miteinander in Reihe geschaltet sind. D. h. in beide Stromrichtungen wird der Stromfluss blockiert. Zener-Dioden haben den Vorteil, ab Anliegen einer so genannten Durchbruchsspannung in Sperrrichtung der jeweiligen Zener-Diode durchzuschalten, sodass der Strom in Sperrrichtung dieser Zener-Diode fließen kann. In dem Fall fließt der Strom nicht mehr über den Bipolartransistor. Damit nimmt die Brems- bzw. Dämpfwirkung zwar schlagartig zu, aber der Bipolartransistor kann nicht zerstört werden, was die Betriebssicherheit erhöht.

Eine andere erfindungsgemäße Schaltung für derartige Türbetätiger umfasst eine der vorgenannten Bremsschaltungen und zudem eine Antriebsschaltung, die eingerichtet ist, den Elektromotor des Türbetätigers in eine zu der ersten Betriebsrichtung entgegengesetzte, zweite Betriebsrichtung motorisch zu betreiben. D. h. der Türbetätiger wird zu einem Türantrieb, der den angeschlossenen Türflügel in eine der zweiten Betriebsrichtung entsprechende Bewegungsrichtung, beispielsweise Öffnungsrichtung, bewegt. Die Schaltung umfasst ferner eine Umschalteinrichtung, die ihrerseits eingerichtet ist, zwischen der Antriebsschaltung und der Bremsschaltung umzuschalten. D. h. in Bezug auf das vorgenannte Beispiel ist die Schaltung in der Lage, beim (motorischen) Öffnen des Türflügels jedwede generatorische Bremswirkung zu vermeiden und diese beim Schließen des Türflügels zuzuschalten.

Ein erfindungsgemäßer Türbetätiger weist einen Elektromotor auf, der in eine erste Betriebsrichtung generatorisch betrieben wird. Ferner weist ein derartiger Türbetätiger eine der vorgenannten Schaltungen auf.

Weitere Merkmale und Vorteile der Erfindung ergeben sich aus der nachfolgenden Beschreibung bevorzugter Ausführungsformen. Es zeigen:
- Figur 1: eine Bremsschaltung gemäß einer ersten Ausführungsform der Erfindung,
- Figur 2: eine Bremsschaltung gemäß einer zweiten Ausführungsform der Erfindung,
- Figur 3: eine Bremsschaltung gemäß einer dritten Ausführungsform der Erfindung und
- Figur 4: eine Abwandlung hinsichtlich der Anschlussleiste gemäß Figuren 1 bis 3.

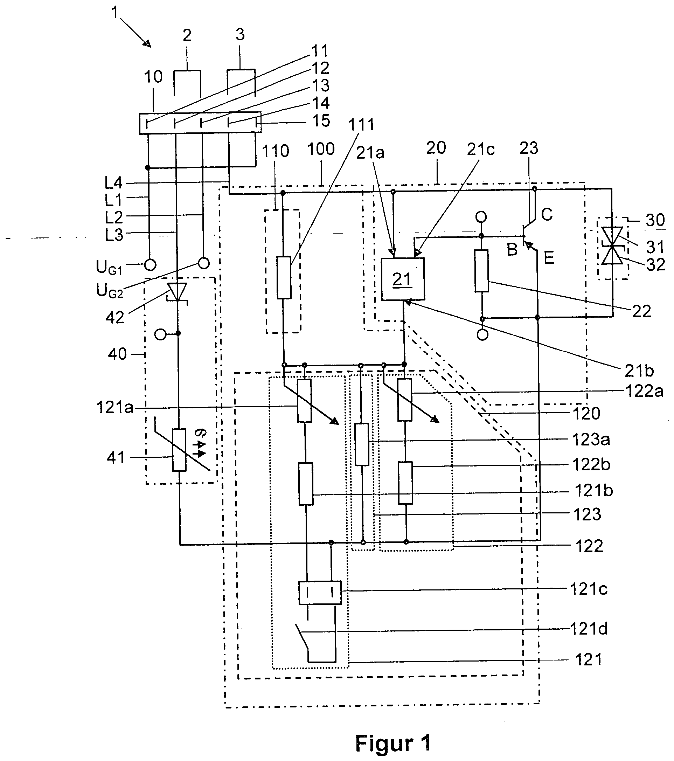

Figur 1 zeigt einen Türbetätiger mit einem Elektromotor und einer Bremsschaltung 1 gemäß einer ersten Ausführungsform der Erfindung, wobei der Elektromotor und der umfassende Türbetätiger nicht dargestellt sind. Der nicht dargestellte Elektromotor ist über dargestellte Anschlüsse U_{G1}, U_{G2} und Anschlussleitungen L1, L2 beispielhaft mit einer Anschlussleiste 10 gekoppelt. Zudem sind an der Anschlussleiste 10 interne Anschlussleitungen L3, L4 zum restlichen Teil der Bremsschaltung 1 angeschlossen. Die Anschlussleiste 10 umfasst exemplarisch fünf nebeneinander liegende Anschlüsse 11 - 15 bzw. -Buchsen. Wie zu erkennen, sind die internen Anschlussleitungen L3, L4 mit Anschlüssen 12, 14 gekoppelt, zwischen denen sich lediglich der Anschluss 13 befindet, und die jeweils von zwei Anschlüssen 11, 13 bzw. 13, 15 unmittelbar benachbart umgeben sind. Eine der externen Leitungen L1, L2 ist mit zwei Anschlüssen 11, 15 gekoppelt, die jeweils außen in Bezug auf die Anschlussleiste 10 zu den Anschlüsse 12, 14 unmittelbar benachbart angeordnet sind. Die andere exteme Anschlussleitung L2 bzw. L1 ist an den zwischen den Anschlüssen 12, 14 liegenden Anschluss 13 angeschlossen. Dadurch ist es möglich, mittels Anschlussbrücken 2, 3 vorzugsweise gleicher Bauart die internen Anschlussleitungen L3, L4 wahlweise mit der jeweiligen Anschlussleitung L1, L2 zu koppeln, wie später näher erläutert.

Die Anschlussleitung L4 ist sowohl mit einem Gleichspannungsanschluss 21a eines Spannungsreglers 21 als auch mit einem Kollektor C eines Bipolartransistors 23 gekoppelt. Ferner ist die Anschlussleitung L4 mit einer gestrichelt umrandeten Widerstandsschaltung 110 gekoppelt, die parallel zum Gleichspannungsanschluss 21a und zu einem Referenzspannungsanschluss 21b des Spannungsreglers 21 geschaltet ist. Im gezeigten Beispiel besteht die Widerstandsschaltung 110 lediglich aus einem ohmschen Widerstand 111.

Der Spannungsregler 21 ist über einen Regelspannungsanschluss 21c mit der Basis B des Bipolartransistors 23 gekoppelt.

Die zweite interne Anschlussleitung L3 ist mit dem Emitter E des Bipolartransistors 23 gekoppelt und mit dem Referenzspannungsanschluss 21b des Spannungsreglers21 elektrisch verbunden. Die Widerstandsschaltung 110 dient dazu, dem Spannungsregler 21 am Referenzspannungsanschluss 21b eine Referenzspannung einzugeben, mittels der der Spannungsregler 21 die am Gleichspannungsanschluss 21a anliegende Spannung auf eine zugehörige, vorbestimmte Regelspannung regelt, die über den Regelspannungsanschluss 21c an die Basis B des Bipolartransistors 23 angelegt wird. Aufgrund des internen elektrischen Widerstands des Spannungsreglers 21 wird damit gleichzeitig der Strom geregelt, der an die Basis B des Bipolartransistors 23 angelegt wird. Da der Basisstrom die maximale Stromstärke des über die Kollektor-Ermittler-Strecke des Bipolartransistors 23 fließenden Stroms bestimmt, wird damit die maximal über den Bipolartransistor 23 abführbare, d. h. in Wärmeenergie umwandelbare, vom Elektromotor generatorisch erzeugte Energie bestimmt. Dies führt zu einem geregelten Brems- bzw. Dämpfverhalten der Bremsschaltung 1 in Bezug auf die angeschlossene Tür.

Die elektrische Verbindung der internen Anschlussleitung L3 zum Referenzspannungsanschluss 21b des Spannungsreglers 21 erfolgt vorzugsweise über eine zweite, wiederum gestrichelt umrandete Widerstandsschaltung 120, die parallel zum Referenzspannungsanschluss 21b des Spannungsreglers 21 und zum Emitter E des Bipolartransistors 23 geschaltet ist. D. h. die Widerstandsschaltungen 110, 120 bilden einen mittels Strich-Punkt-Linie umrandeten Spannungsteiler 100, dessen Mittenabgriff durch die Kopplung der Widerstandsschaltungen 110, 120 untereinander gebildet ist und mit besagtem Referenzspannungsanschluss 21b des Spannungsreglers 21 gekoppelt ist. Im gezeigten Beispiel ist der Bipolartransistor 23 ein PNP-Bipolartransistor, wobei zwischen Regelspannungsanschluss 21c und Basis B des Bipolartransistors 23 zusätzlich ein Widerstand 22 als Pull-down-Widerstand parallel zur Basis-Emitter-Strecke des Bipolartransistors 23 geschaltet ist.

Vorzugsweise ist parallel zur Kollektor-Ermittler-Strecke des Bipolartransistors 23 zusätzlich eine mittels Strich-Punkt-Linie umrandete Sicherheitsschaltung 30 geschaltet, die im gezeigten Beispiel zwei in Bezug auf ihre Durchlassrichtungen zueinander gegensinnig und miteinander in Reihe geschaltete Zener-Dioden 31, 32 umfasst. Die Sicherheitsschaltung 30 dient dem Zweck, bei Vorliegen einer Kollektor-Emitter-Überspannung am Bipolartransistor 23, die höher als die jeweilige Durchbruchsspannung der jeweils in Sperrrichtung geschalteten Zener-Diode 31, 32 ist, ein Durchleiten für den elektrischen Strom am Bipolartransistor 22 vorbei zu bewirken. Dadurch steigt zwar schlagartig die Brems- bzw. Dämpfwirkung der Bremsschaltung 1, aber es werden keine Komponenten der Bremsschaltung 1 zerstört oder beschädigt. Zudem bewirkt das Durchschalten, dass eine angeschlossene Tür beispielsweise aufgrund der Schließkraft einer Schließerfeder nicht ungebremst geschlossen werden kann, wodurch die Gefahr eines Einklemmens beispielsweise einer Person zumindest wesentlich verringert ist. D. h. die Sicherheitsschaltung 30 dient dem Überspannungsschutz und damit der Ausfallsicherheit der Bremsschaltung 1. Damit kann wirksam verhindert oder die Gefahr minimiert werden, dass Komponenten der Bremsschaltung 1 beschädigt werden und ggf. ein Austausch erforderlich ist, was Kosten und Aufwand bedeutet.

Die beschriebene Verschaltung aus Spannungsregler 21, Pull-Down-Widerstand 22 und Bipolartransistor 23 bildet somit eine mittels Strich-Punkt-Linie umrandete Lastwiderstandsschaltung 20, über die (ein Teil der) vom Elektromotor generatorisch erzeugten Energie abgebaut wird.

Die Widerstandsschaltung 120 umfasst im gezeigten Beispiel drei zueinander parallel geschaltete, jeweils mittels einer Punktlinie umrandete Widerstandszweige 121, 122, 123. Der erste Widerstandszweig 121 umfasst exemplarisch zwei miteinander In Reihe geschaltete Widerstände 121a, 121b, von denen einer beispielhaft einstellbar und vorzugsweise als Potentiometer ausgebildet ist. Zusätzlich weist dieser Widerstandszweig 121 einen mit den zwei Widerständen 121a, 121b In Reihe geschalteten, beispielhaft als Schließer ausgebildeten Schalter 121d auf. Vorzugsweise ist anstelle des Schalters 121d wiederum eine Anschlussleiste 121c mit besagten Widerständen 121a, 121b in Reihe geschaltet. Der Schalter 121d ist in die Anschlussleiste 121c vorzugsweise gesteckt. Dadurch ist es möglich, den Schalter 121d zu entfernen, wenn der Widerstandszweig 121 deaktiviert werden soll, oder über eine eingesteckte, nicht dargestellte Anschlussbrücke vorzugsweise ähnlich den Anschlussbrücken 2, 3 dauerhaft zu verbinden, sodass die Widerstände 121a, 121b ständig (brems-)aktiv sind. Der Schalter 121d hat beispielhaft die Funktion eines Endschlagschalters 121d. Dies bedeutet, wenn der betreffende, zu bremsende Türflügel geschlossen wird und sich nahe seiner Schließlage befindet, wird der Schalter 121d vorzugsweise geschlossen, sodass der Widerstandszweig 121 zugeschaltet wird und damit die Widerstände 121a, 121b aktiv werden. Dies führt dazu, dass über die Widerstandsschaltung 120 ein größerer Gesamtstrom fließt. Dies führt zu einem zur Kollektor-Emitter-Strecke geführten geringeren Strom. Dadurch sinkt die im Bipolartransistor 23 in Wärmeenergie umwandelbare Energie, was zu einer verringerten Brems- bzw. Dämpfwirkung der Bremsschaltung 1 führt. D. h. die Bremsschaltung 1 bewirkt einen geringeren Widerstand gegen die momentane Bewegung des angeschlossenen Türflügel zu, hier in Schließrichtung.

Bei einem als Drehflügelantrieb ausgebildeten Türbetätiger, der einen Türflügel motorisch öffnet und mittels Schließerfederkraft schließt, führt dies dazu, dass beim Schließen der Tür nahe der Schließlage der durch die Bremsschaltung 1 bewirkte Widerstand gegen die Schließbewegung nahezu schlagartig abnimmt und der Türbetätiger damit mehr Kraft auf den Türflügel ausüben kann, um ihn in die endgültige Schließlage sicher zu befördern. Dieses Prinzip des "abschaltbaren" Bremswiderstands ist als so genannte Endschlaglösung bekannt.

Der zweite Widerstandszweig 123 besteht im gezeigten Beispiel lediglich aus einem elektrischen bzw. ohmschen Widerstand 123a.

Der verbleibende Widerstandszweig 122 besteht exemplarisch aus zwei miteinander in Reihe geschalteten Widerständen 122a, 122b, von denen der Widerstand 122a wiederum vorzugsweise als Potentiometer ausgebildet ist.

Zwischen Emitter E des Bipolartransistors 23 und der Anschlussleiste 10 bzw. der Anschlussleitung L3 ist vorzugsweise eine Sicherheitsschaltung 40 in Reihe geschaltet. Die Sicherheitsschaltung 40 umfasst hauptsächlich eine Sicherung 41 in Form beispielsweise eines Kaltleiters, d. h. eines elektrischen Bauelements, dessen elektrischer Widerstand mit steigender Temperatur vorzugsweise ebenfalls steigt. Die Sicherung 41 dient dem Zweck, bei Überschreiten einer Temperatur der Bremsschaltung 1 bzw. des Bipolartransistors 23 den durch die Bremsschaltung 1 fließenden Gesamtstrom zu verringern, was dazu führt, dass die vom Bipolartransistor 23 bzw. von der Bremsschaltung 1 abgeführte Energie sinkt. Im Ergebnis steigt der Gesamtwiderstand der gesamten Bremsschaltung 1, was zu einer verringerten Brems bzw. Dämpfwirkung der Bremsschaltung 1 führt. D. h. die Sicherheitsschaltung 40 dient dem Überhitzungsschutz der Bremsschaltung 1.

Die Sicherung 41 ist demzufolge derart positioniert, dass die Wärmeentwicklung des Bipolartransistors 23 erfasst wird.

Anstelle eines thermisch beeinflussbaren Widerstands kann auch ein Schalter beispielsweise in Form eines Bimetalls verwendet werden. In dem Fall erfolgt eine Zweipunktregelung, bei der die Bremsschaltung 1 lediglich komplett zu- oder weggeschaltet werden kann.

Allerdings kann die Sicherung 41 auch mittels einer komplexeren Schaltung, beispielsweise einer Reihenschaltung eines Bimetall-Schalters mit einem Kaltleiter, gebildet sein. Diese Schaltung hat den Vorteil, dass die Bremsschaltung 1 aufgrund des Kaltleiters nicht schlagartig ihre Brems- bzw. Dämpfwirkung verliert, aber aufgrund des Bimetall-Schalters komplett abgeschaltet werden kann.

Zusätzlich zur Sicherung 41 umfasst die Sicherheitsschaltung 40 vorzugsweise ferner eine mit der Sicherung 41 in Reihe geschaltete Diode die weiterhin vorzugsweise als Zener-Diode 42 ausgebildet ist. Die Zener-Diode 42 dient dem Verpolungsschutz der Bremsschaltung 1.

Die Kopplung der internen Anschlussleitung L3, L4 mit den externen Anschlussleitungen L1, L2 erfolgt im gezeigten Beispiel über zwei vorzugsweise identisch ausgebildete Anschlussbrücken 2, 3. Die Anschlussbrücken 2, 3 werden einfach auf die miteinander zu koppelnden Paare von Anschlüssen 11, 12; 12, 13; 13, 14 bzw. 14, 15 der Anschlussleiste 10 gesteckt (hier: 12, 13 und 14, 15).

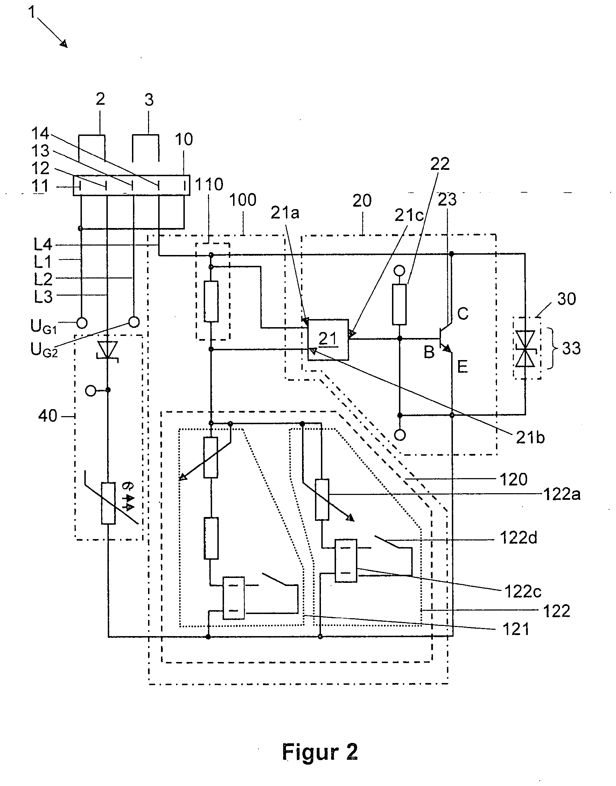

Figur 2 zeigt eine Bremsschaltung 1 gemäß einer zweiten, hinsichtlich der ersten Ausführungsform abgewandelten Ausführungsform der Erfindung. Wie zu erkennen, koppeln die Anschlussbrücken 2, 3 hier die Anschlüsse 11, 13 mit dem jeweiligen Anschluss 12, 14. D. h. die Richtung des extern vom Elektromotor zugeführte elektrische Stroms ist zur ersten Ausführungsform der Erfindung entgegengesetzt. Damit wird die Rolle der Verschaltung der externen und internen Anschlussleitungen L1, L2, L3, L4 mit der Anschlussleiste 10 deutlich. Da jeder Anschluss 12, 14 hier für die intemen Leitungen von jeweils zwei Anschlüssen 11, 13 bzw. 13, 15 umgeben ist, die an eine jeweilige der externen Anschlussleitungen L1, L2 angeschlossen ist, ist es möglich, einfach mittels Steckens der Anschlussbrücken 2, 3 die Stromrichtung in der Bremsschaltung 1 beibehalten aber an die Drehrichtung des Elektromotors im Generatorbetrieb anpassen zu können.

Der Vorteil dieser Lösung ist, dass die Verschaltung der Bremsschaltung 1 und der Anschlussleitungen L1, L2 zum Elektromotor gleich bleibt, also die Möglichkeit eröffnet, ein und dieselbe Bremsschaltung 1 für beide Drehrichtungen des generatorisch betriebenen Elektromotors verwenden zu können.

Die Bremsschaltung 1 umfasst auch hier eine Lastwiderstandsschaltung 20 und einen Spannungsteiler 100. Die Widerstandsschaltung 120 des Spannungsteilers 100 umfasst lediglich zwei Widerstandszweige 121, 122. Der Widerstandszweig 121 ist identisch zum Widerstandszweig 121 gemäß der ersten Ausführungsform der Erfindung ausgebildet. Der Widerstandszweig 122 umfasst neben einem einstellbaren Widerstand 122a eine Schalterschaltung ähnlich dem Widerstandszweig 121. D. h. der Widerstand 122a ist vorzugsweise mit einer Anschlussleiste 122c in Reihe geschaltet, in die ein beispielhaft als Öffner ausgebildeter Schalter 122d gesteckt ist. Dadurch ist es möglich, einen zweiten Öffnungsbereich in Bezug auf die angeschlossene Tür zu definieren, in dem die Brems- bzw. der Dämpfwirkung der Bremsschaltung 1 nunmehr mittels Schließens bzw. Öffnens des Schalters 122d verändert wird.

Im Gegensatz zur ersten Ausführungsform der Erfindung ist der Bipolartransistor 23 exemplarisch als NPN-Bipolartransistor ausgebildet. Anstelle eines Pull-Down-Widerstands ist ein als Pull-Up-Widerstand verwendeter Widerstand 22 zwischen Regelspannungsausgang 21c des Spannungsreglers 21 und der Basis B des Bipolartransistors 23 sowie parallel zur Basis-Kollektor-Strecke des Bipolartransistors 23 geschaltet.

Ferner ist anstelle zweier Zener-Dioden 31, 32 eine SMD-Schutzdiode 33 beispielhaft vom Typ SM6T30CA eingesetzt.

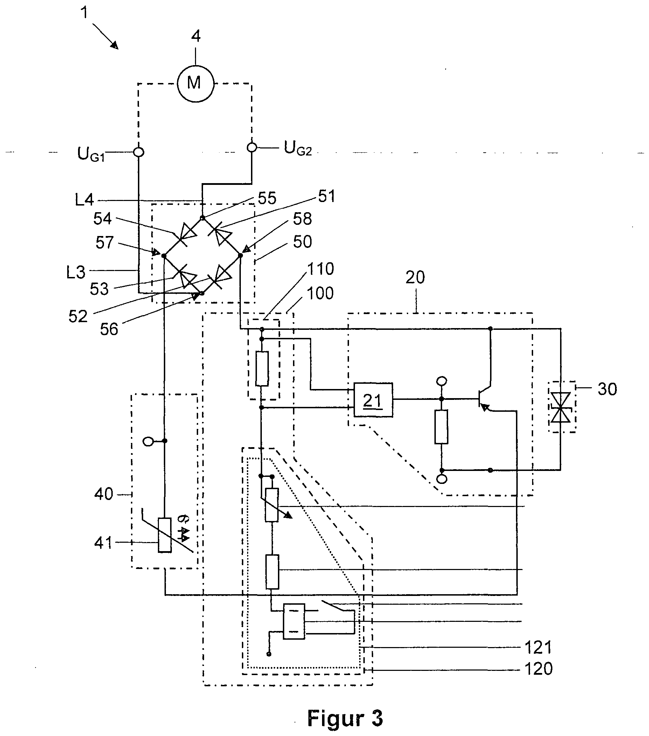

Figur 3 zeigt eine Bremsschaltung 1 gemäß einer dritten Ausführungsform der Erfindung. Wie zu erkennen, sind die internen Anschlussleitungen L3, L4 an Gleichrichtungs- bzw. allgemeine Spannungsanschlüsse 55, 56 eines mittels Strich-Punkt-Linie umrandeten Gleichrichters 50 angeschlossen. Die Bremsschaltung 1 ist mit den verbleibenden Gleichspannungsanschlüssen 57, 58 des Gleichrichters 50 gekoppelt. Vorzugsweise ist der Gleichrichter 50 mittels einer Graetz-Brücke gebildet, weist also vier gemäß Figur 3 über Kreuz geschaltete Dioden 51 - 54 auf. Dadurch ist es möglich, in beiden Drehrichtungen des über die Anschlüsse U_{G1} und U_{G2} angeschlossenen Elektromotors 4 eine entsprechende Brems- bzw. Dämpfwirkung zu erreichen und ihn ggf. in beide Drehrichtungen mit entsprechender Brems- bzw. Dämpfwirkung generatorisch zu betreiben. Dies ist insbesondere bei Türantrieben sinnvoll, bei denen die Spannungsversorgung ausgefallen ist, sodass der Elektromotor 4 nicht mehr betrieben werden kann. Der angeschlossene Türflügel kann weiterhin manuell (gegen die Kraft des Elektromotors 4) geöffnet und geschlossen werden. Die Bremsschaltung 1 bewirkt dabei ein Bremsen bzw. Dämpfen sowohl in Öffnung- als auch in Schließrichtung des Türflügels, was die Betriebssicherheit trotz ausgefallenen Antriebs erhöht. Die Bremsschaftung 1 entspricht, abgesehen vom Gleichrichter 50, im Wesentlichen dem Aufbau gemäß der ersten Ausführungsform der Erfindung. Allerdings weist die Widerstandsschaltung 120 hier nur einen Widerstandszweig 121 auf, der exemplarisch eine Potentiometer-Widerstands-Anschlussleisten-Schaltung gemäß der ersten Ausführungsform der Erfindung beinhaltet. Zusätzlich kann hier die Zener-Diode 42 entfallen, da die Gleichrichtung vom Gleichrichter 50 übernommen wird. Zusätzlich fehlt in der gezeigten Bremsschaltung 1 die Anschlussleiste 10. Der Elektromotor 4 ist über die Anschlüsse U_{G1}, U_{G2} direkt mit den internen Anschlussleitungen L3, L4 gekoppelt. Dadurch können die extemen Anschlussleitungen L1, L2 entfallen, was die Bremsschaltung 1 vereinfacht.

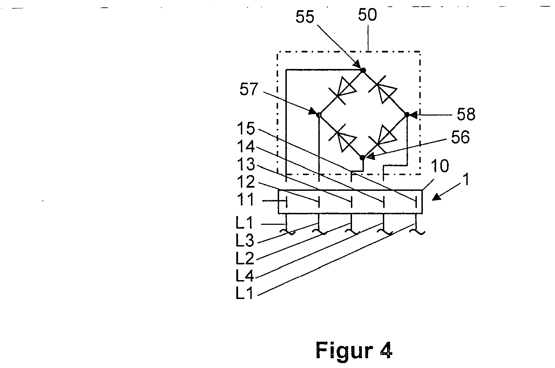

Bei der in Figur 4 ausschnittsweise dargestellten Bremsschaltung 1 gemäß einer vierten Ausführungsform der Erfindung sind die Anschlussleitungen L1 - L4 vorzugsweise gemäß der ersten Ausführungsform der Erfindung mit der Anschlussleiste 10 gekoppelt. Anstelle der Anschlussbrücken 2, 3 ist hier allerdings ein als ein schematisch dargestelltes Modul ausgebildeter Gleichrichter 50 vorgesehen, der eingerichtet ist, in die Anschlussleiste 10 eingesetzt zu werden, und zwar in beiden in Figuren 1 und 2 gezeigten Konfigurationen. Dazu sind die allgemeinen Spannungsanschlüsse 55, 58 des Gleichrichters 50 exemplarisch jeweils mit einem der Anschlüsse 11, 13 der Anschlussleiste 10 gekoppelt, während die Gleichspannungsanschlüsse 57, 58 mit dem Anschlüssen 12, 14 der Anschlussleiste 10 gekoppelt sind. Dadurch ist es möglich, auch die Bremsschaltungen 1 gemäß ist ersten und der zweiten Ausführungsform der Erfindung mit einem Gleichrichter 50 auszustatten, ohne an die Bremsschaltung 1 selbst Hand anlegen zu müssen; lediglich die Anschlussbrücken 2, 3 sind gegen das Gleichrichtermodul auszuwechseln. Dadurch ist die Bremsschaltung 1 nahezu universell einsetzbar, je nachdem, in welche Drehrichtung des angeschlossenen Elektromotors eine Brems- bzw. Dämpfwirkung bewirkt werden soll.

Der Gleichrichter 50 kann bei allen gezeigten Schaltungen eingesetzt bzw. in diese integriert werden.

Die Sicherheitsschaltungen 30, 40 können, wenn nicht erforderlich, entfallen.

Die Widerstandsschaltung 110, 120 des Spannungsteilers 100 kann ähnlich der jeweils anderen Widerstandsschaltung 120, 110 ausgeführt sein. Genauso ist es möglich, die Widerstandsschaltung 110, 120 in den Figuren unterhalb des Mittenabgriffs des Spannungsteilers 100 anzuordnen. Die Anschlussleiste 10 kann gegen die Kopplung gemäß Figur 3 ersetzt sein. Genauso kann die Kopplung gemäß Figur 3 durch eine Anschlussleiste 10 ersetzt sein.

Im Ergebnis ist durch die Erfindung eine universelle einsetzbare, schnell ansprechende Bremsschaltung 1 mit einem generatorisch betriebenen Elektromotor 4 eines Türbetätigers geschaffen.

### Bezugszeichenliste

- 1: Bremsschaltung
- 2: Anschlussbrücke
- 3: Anschlussbrücke
- 4: Elektromotor

- 10: Anschlussleiste
- 11: Anschluss
- 12: Anschluss
- 13: Anschluss
- 14: Anschluss
- 15: Anschluss

- 20: Lastwiderstandsschaltung
- 21: Spannungsregler
- 21a: Gleichspannungsanschluss
- 21b: Referenzspannungsanschluss
- 21c: Regelspannungsanschluss
- 22: Widerstand
- 23: Bipolartransistor

- 30: Sicherheitsschaltung
- 31: Zener-Diode
- 32: Zener-Diode
- 33: SMD-Schutzdiode

- 40: Sicherheitsschaltung
- 41: Sicherung
- 42: Zener-Diode
- 50: Gleichrichter
- 51: Diode
- 52: Diode
- 53: Diode
- 54: Diode
- 55: Gleichrichtungs- bzw. allgemeiner Spannungsanschluss
- 56: Gleichrichtungs- bzw. allgemeiner Spannungsanschluss
- 57: Gleichspannungsanschluss
- 58: Gleichspannungsanschluss

- 100: Spannungsteiler
- 110: Widerstandsschaltung
- 111: Widerstand
- 120: Widerstandsschaltung
- 121: Widerstandszweig
- 121a: Widerstand
- 121b: Widerstand
- 121c: Anschlussleiste
- 121d: Schalter
- 122: Widerstandszweig
- 122a: Widerstand
- 122b: Widerstand
- 122c: Anschlussleiste
- 122d: Schalter
- 123: Widerstandszweig
- 123a: Widerstand

- U_{G1}: Anschluss Elektromotor
- U_{G2}: Anschluss Elektromotor
- B: Basis
- C: Kollektor
- E: Emitter

- L1: externe Anschlussleitung
- L2: externe Anschlussleitung
- L3: interne Anschlussleitung
- L4: interne Anschlussleitung

## Patentansprüche

1. Türbetätiger, aufweisend
• einen Elektromotor (4), der in eine erste Betriebsrichtung generatorisch betrieben wird, und eine Bremsschaltung (1), welche eingerichtet ist, eine Bewegung einer angeschlossenen Tür in zumindest eine Bewegungsrichtung zu beeinflussen, mit dem zumindest einen Elektromotor (4), wobei die Bremsschaltung (1) eingerichtet ist, bei einem generatorischen Betreiben des Elektromotors (4) des Türbetätigers in eine der einen Bewegungsrichtung entgegengesetzte erste Betriebsrichtung des Elektromotors (4) dessen generatorisch erzeugte Energie einem Bipolartransistor (23) als Lastwiderstand zuzuführen, und wobei die Bremsschaltung (1) einen Spannungsregler (21) aufweist der
- eine an den Basis-Anschluss des Bipolartransistors (23) angelegte Spannung gemäß einer im Elektromotor (4) erzeugten Generatorspannung auf eine zugehörige Regelspannung auf Basis einer Referenzspannung regelt sowie
- einen Referenzeingang (21b) zum Anlegen der Referenzspannung,
- einen Spannungseingang (21a) und
- einen Ausgang (21c) zum Ausgeben der Regelspannung umfasst, wobei, beim generatorischen Betreiben des Elektromotors (4),
• ein erster Spannungsanschluss des Elektromotors (4) mit dem Kollektor-Anschluss (C) des Bipolartransistors (23) und dem Spannungseingang (21a) des Spannungsreglers (21) und über einen ersten Widerstandszweig (110), umfassend zumindest einen elektrischen Widerstand (111), mit dem Referenzeingang (21b) des Spannungsreglers (21) gekoppelt ist und
• ein zweiter Spannungsanschluss des Elektromotors (4) mit dem Emitter-Anschluss (E) des Bipolartransistors (23) gekoppelt ist.

2. Türbetätiger gemäß Anspruch 1, wobei der erste Widerstandszweig (110) als ein erster Spannungsteilerabschnitt Teil eines Spannungsteilers (100) ist,
• der parallel zur Kollektor-Emitter-Strecke des Bipolartransistors (23) geschaltet ist,
• dessen Mittenabgriff mit dem Referenzeingang (21b) des Spannungsreglers (21) gekoppelt ist und
• über den der erste Widerstandszweig (110) bzw. erste Spannungsteilerabschnitt mit einem zweiten Spannungsteilerabschnitt (120) des Spannungsteilers (100) in Reihe geschaltet ist.

3. Türbetätiger gemäß Anspruch 2, wobei der zweite Spannungstellerabschnitt (120) einen zweiten Widerstandszweig (121) mit einem Schalter(121d) und einen mit dem Schalter (121d) in Reihe geschalteten elektrischen Widerstand (121a, 121b) umfasst.

4. Türbetätiger gemäß Anspruch 3, wobei der zweite Spannungsteilerabschnitt (120) zumindest einen zum zweiten Widerstandszweig (121) parallel geschalteten dritten Widerstandszweig (122, 123) umfasst.

5. Türbetätiger gemäß einem der vorhergehenden Ansprüche, wobei zumindest einer der Widerstandszweige (110, 121, 122, 123) des Spannungsteilers (100) einen einstellbaren Widerstand (121a, 122a) umfasst.

6. Türbetätiger gemäß Anspruch 5, wobei der zumindest eine einstellbare Widerstand (121a, 122a) mittels eines Potentiometers gebildet ist.

7. Türbetätiger gemäß einem der vorherigen Ansprüche, ferner aufweisend eine parallel zur Kollektor-Emitter-Strecke des Bipolartransistors (23) geschaltete Sicherungseinrichtung (30).

8. Türbetätiger gemäß Anspruch 7, wobei die Sicherungseinrichtung (30) zwei miteinander in Reihe geschaltete Zener-Dioden (31, 32), die mit ihren Durchlassrichtungen entgegengesetzt zueinander miteinander in Reihe geschaltet sind, oder eine Schutzdiode (33) umfasst.

9. Türbetätiger gemäß Anspruch 1 weiterhin umfassend eine Antiebsschaltung, die eingerichtet ist,
den Elektromotor (4) in eine zu der ersten Betriebsrichtung entgegengesetzte zweite Betriebsrichtung motorisch zu betreiben, und
• eine Umschalteinrichtung, eingerichtet, zwischen der Antriebsschaltung und der Bremsschaltung (1) umzuschalten.

## Claims

1. A door actuator, having
• an electric motor (4), which is driven in a generative manner in a first operating direction, and a brake circuit (1) configured to influence a movement of a connected door in at least one movement direction, with the at least one electric motor (4), wherein the brake circuit (1) is configured, in the case of a generative operation of the electric motor (4) of the door actuator, to supply its generatively produced energy to a bipolar transistor (23) as a load resistance in a first operating direction of the electric motor (4) opposed to a movement direction, and wherein the brake circuit (1) has a voltage regulator (21), which
- regulates a voltage applied to the base terminal of the bipolar transistor (23) according to a generator voltage produced in the electric motor (4) to an associated control voltage based on a reference voltage and comprises
- a reference input (21b) for applying the reference voltage,
- a voltage input (21a) and
- an output (21c) for outputting the control voltage, wherein, in the case of generative operation of the electric motor (4),
• a first voltage terminal of the electric motor (4) is coupled to the collector terminal (C) of the bipolar transistor (23) and to the voltage input (21a) of the voltage regulator (21) and is coupled via a first resistor branch (110), comprising at least one electric resistor (111), to the reference input (21b) of the voltage regulator (21) and
• a second voltage terminal of the electric motor (4) is coupled to the emitter terminal (E) of the bipolar transistor (23).

2. The door actuator according to claim 1, wherein the first resistor branch (110), as a first voltage divider section, is part of a voltage divider (100),
• which is connected in parallel to the collector-emitter portion of the bipolar transistor (23),
• its center tap is coupled to the reference input (21b) of the voltage regulator (21) and
• via which the first resistor branch (110) or first voltage divider section is connected in series to a second voltage divider section (120) of the voltage divider (100).

3. The door actuator according to claim 2, wherein the second voltage divider section (120) comprises a second resistor branch (121) with a switch (121d) and an electric resistor (121a, 121b) connected in series to the switch (121d).

4. The door actuator according to claim 3, wherein the second voltage divider section (120) comprises at least one third resistor branch (122, 123) connected in parallel to the second resistor branch (121).

5. The door actuator according to one of the preceding claims, wherein at least one of the resistor branches (110, 121, 122, 123) of the voltage divider (100) comprises an adjustable resistor (121a, 122a).

6. The door actuator according to claim 5, wherein the at least one adjustable resistor (121a, 122a) is formed by means of a potentiometer.

7. The door actuator according to one of the preceding claims, further having a fuse device (30) connected in parallel to the collector-emitter portion of the bipolar transistor (23).

8. The door actuator according to claim 7, wherein the fuse device (30) comprises two Zener diodes (31, 32) connected in series to one another, which are connected in series with their forward directions opposing one another, or comprises a protective diode (33).

9. The door actuator according to claim 1, further comprising a drive circuit configured to operate the electric motor (4) in a motorized manner in a second operating direction opposed to the first operating direction, and
• a switch-over device configured to switch over between the drive circuit and the brake circuit (1).

## Revendications

1. Actionneur de porte, ayant
• un moteur électrique (4), qui est entraîné de manière générative dans un premier sens de fonctionnement, et un circuit de freinage (1) configuré pour influencer un mouvement d'une porte connectée dans au moins un sens de mouvement, avec l'au moins un moteur électrique (4), dans lequel le circuit de freinage (1) est configuré, dans le cas d'un fonctionnement génératif du moteur électrique (4) de l'actionneur de porte, pour fournir son énergie produite de manière générative à un transistor bipolaire (23) en tant que résistance de charge dans un premier sens de fonctionnement du moteur électrique (4) opposé à un sens de déplacement, et dans lequel le circuit de freinage (1) a un régulateur de tension (21), qui
- régule une tension appliquée à la borne de base du transistor bipolaire (23) en fonction d'une tension de générateur produite dans le moteur électrique (4) à une tension de commande associée basée sur une tension de référence et comprend
- une entrée de référence (21b) pour appliquer la tension de référence,
- une entrée de tension (21a) et
- une sortie (21c) pour envoyer la tension de commande, dans lequel, dans le cas de fonctionnement générateur du moteur électrique (4),
• une première borne de tension du moteur électrique (4) est couplée à la borne de collecteur (C) du transistor bipolaire (23) et à l'entrée de tension (21a) du régulateur de tension (21) et est couplée par l'intermédiaire d'une première branche de résistance (110), comprenant au moins une résistance électrique (111), à l'entrée de référence (21b) du régulateur de tension (21) et
• une seconde borne de tension du moteur électrique (4) est couplée à la borne d'émetteur (E) du transistor bipolaire (23).

2. Actionneur de porte selon la revendication 1, dans lequel la première branche de résistance (110), en tant que première section de diviseur de tension, fait partie d'un diviseur de tension (100),
• qui est connecté en parallèle à la partie collecteur-émetteur du transistor bipolaire (23),
• sa prise médiane est couplée à l'entrée de référence (21b) du régulateur de tension (21) et
• par l'intermédiaire duquel la première branche de résistance (110) ou la première section de diviseur de tension est connectée en série à une seconde section de diviseur de tension (120) du diviseur de tension (100).

3. Actionneur de porte selon la revendication 2, dans lequel la seconde section de diviseur de tension (120) comprend une deuxième branche de résistance (121) avec un commutateur (121d) et une résistance électrique (121a, 121b) connectée en série au commutateur (121d).

4. Actionneur de porte selon la revendication 3, dans lequel la deuxième section de diviseur de tension (120) comprend au moins une troisième branche de résistance (122, 123) connectée en parallèle à la deuxième branche de résistance (121).

5. Actionneur de porte selon l'une des revendications précédentes, dans lequel au moins une des branches de résistance (110, 121, 122, 123) du diviseur de tension (100) comprend une résistance réglable (121a, 122a).

6. Actionneur de porte selon la revendication 5, dans lequel l'au moins une résistance réglable (121a, 122a) est formée au moyen d'un potentiomètre.

7. Actionneur de porte selon l'une des revendications précédentes, ayant en outre un dispositif de fusible (30) connecté en parallèle à la partie collecteur-émetteur du transistor bipolaire (23).

8. Actionneur de porte selon la revendication 7, dans lequel le dispositif fusible (30) comprend deux diodes Zener (31, 32) connectées en série l'une à l'autre, qui sont connectées en série avec leurs sens avant opposés l'un de l'autre, ou comprend une diode de protection (33).

9. Actionneur de porte selon la revendication 1, comprenant en outre un circuit d'entraînement configuré pour faire fonctionner le moteur électrique (4) de manière motorisée dans un second sens de fonctionnement opposé au premier sens de fonctionnement, et
• un dispositif de commutation configuré pour commuter entre le circuit d'entraînement et le circuit de freinage (1).
